# FASCICULE DE BREVET EUROPEEN

(11) **EP 3 074 997 B1**
(45) Date de publication et mention de la délivrance du brevet: **03.01.2018**
(21) Numéro de dépôt: 14806009.8
(22) Date de dépôt: 05.11.2014
(51) Int. Cl.: H01H 19/14, B62D 1/10

(54) **ENSEMBLE COMPRENANT UN COMMUTATEUR ELECTRIQUE ET UN VOLANT DE VEHICULE**
ANORDNUNG AUS EINEM ELEKTRISCHEN SCHALTER UND EINEM LENKRAD EINES FAHRZEUGS
ASSEMBLY COMPRISING AN ELECTRIC SWITCH AND A STEERING WHEEL OF A VEHICLE

(30) Priorité: 25.11.2013 FR 1361574
(43) Date de publication de la demande: 05.10.2016
(73) Titulaire: PSA Automobiles SA, 78300 Poissy (FR)
(72) Inventeur: CHEMIN, Guillaume, 91190 St Aubin (FR)
(74) Mandataire: Jeannin, Laurent Jean-Pierre
(86) Numéro de dépôt international: PCT/FR2014/052809
(87) Numéro de publication internationale: WO 2015/075343

(56) Documents cités:
- EP-A2- 0 297 558
- US-A- 4 633 731

## Description

L'invention porte, de façon générale, sur des moyens d'entrainement en rotation d'un contacteur de commutateur électrique situé en haut d'une colonne de direction d'un véhicule.

Plus précisément, l'invention concerne un ensemble comprenant un commutateur électrique et un volant d'un véhicule, notamment automobile, comprenant des moyens d'entrainement en rotation qui présentent l'avantage d'être à la fois simples, fiables, silencieux et efficaces. Le document EP0297558 décrit un dispositif selon le préambule de la revendication 1.

Dans un véhicule automobile, il est connu d'actionner certaines commandes des équipements du véhicule depuis le tableau de bord, par exemple les feux clignotants ou les balais d'essuie-glace.

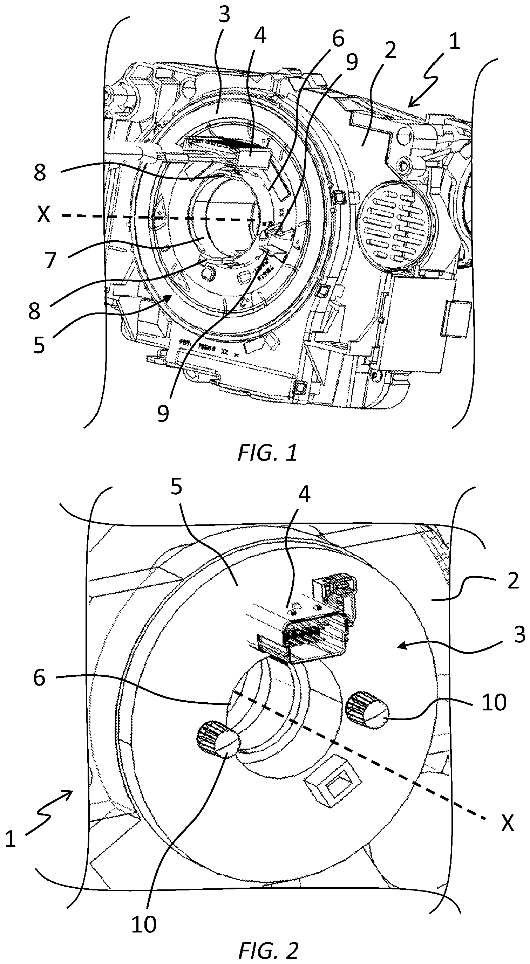

De telles commandes sont connectées auxdits équipements via un commutateur électrique 1, illustré à la figure 1, comprenant un organe fixe 2 monté sur le tableau de bord du véhicule (non représenté) et un organe mobile se présentant sous la forme d'un contacteur rotatif 3 qui permet d'établir, via un connecteur électrique 4, les divers contacts électriques requis lors du fonctionnement de ce commutateur 1.

Le contacteur rotatif 3 comprend une platine annulaire 5 comportant une ouverture centrale 6 dans laquelle est disposée une bague 7 rotative en matière plastique qui est agencée pour recevoir le haut de la colonne de direction (non représentée) et pour être entrainée par le volant (non représenté).

A cette fin, la bague 7 comprend deux éléments primaires 8 d'entrainement en rotation se présentant sous la forme de deux languettes issues de matière de la bague 7, s'étendant en saillie selon une direction parallèle à l'axe longitudinal X de la bague 7, chacune des languettes étant adaptée pour être reçue dans une découpe complémentaire réalisée sur la partie arrière métallique du volant.

Toujours en référence à la figure 1, la platine annulaire 5 comprend deux éléments secondaires 9 d'entrainement en rotation se présentant sous la forme de deux languettes issues de matière de la platine, s'étendant en saillie orthogonalement à la platine et étant adaptées pour recevoir, entre elles, un bossage métallique issue de matière de la partie arrière du volant.

Ainsi, lorsque l'on manoeuvre le volant, les découpes et le bossage permettent l'entrainement en rotation du contacteur rotatif 3 via respectivement les deux éléments primaires 8 de la bague 7 et les deux éléments secondaires 9 de la platine 5.

Il est donc nécessaire, lors de la conception et de la fabrication d'un tel commutateur 1 et d'un tel volant, de prévoir ces éléments primaires 8 et secondaires 9 d'entrainement, ces découpes et ce bossage, ce qui rend cette conception et cette fabrication complexe et présente donc un premier inconvénient.

De plus, les trois liaisons créées par les deux découpes et les deux éléments primaires d'entrainement 8, d'une part, et le bossage et les deux éléments secondaires d'entrainement 9, d'autre part, peuvent créer de nombreux jeux fonctionnels pouvant provoquer l'apparition de nuisances sonores et/ou un inconfort pour le conducteur lors de la manipulation du volant, ce qui présente un deuxième inconvénient.

L'objectif de la présente invention est par conséquent de proposer un ensemble comprenant un commutateur électrique et un volant dont la conception et la fabrication sont simplifiées et qui présentent concomitamment l'avantage d'être solide et confortable pour le conducteur du véhicule tout en réduisant le niveau de nuisances sonores provoquées par son utilisation.

A cet effet, l'invention a pour objet un ensemble selon la revendication 1.

En variante, les moyens de coopération peuvent se présentés sous la forme d'une cavité de réception du doigt d'entrainement.

De préférence encore, dans une forme de réalisation de l'ensemble selon l'invention, le contacteur rotatif comprend au moins un doigt d'entrainement en rotation et le volant comprend au moins une paire d'ailettes de blocage dudit doigt d'entrainement et dans une autre forme de réalisation, le volant comprend au moins un doigt d'entrainement en rotation du contacteur rotatif et le contacteur rotatif comprend au moins une paire d'ailettes de blocage dudit doigt d'entrainement.

Par les termes «au moins en partie recouvert », on entend que le doigt d'entrainement peut être entièrement constitué d'un matériau polymère ou bien qu'il comprend un corps ou noyau, par exemple issu de matière respectivement du contacteur rotatif ou du volant, qui est recouvert d'un revêtement en un matériau polymère.

L'utilisation d'un matériau polymère permet de renforcer la liaison entre le doigt d'entrainement et la paire d'ailette de blocage dudit doigt tout en réduisant les jeux fonctionnels et les nuisances sonores.

De préférence, le matériau polymère est un matériau élastomère. Un tel matériau est aisé à fabriquer et permet à la fois un montage aisé du volant sur le contacteur rotatif et une liaison forte, confortable pour le conducteur et notablement silencieuse entre le doigt d'entrainement et la paire d'ailettes de blocage correspondante.

Les doigts d'entrainement et les moyens de coopération peuvent être équirépartis respectivement sur le contacteur rotatif et sur le volant de sorte à permettre un entrainement en rotation de l'ensemble qui est équivalent aussi bien dans un sens de rotation du volant que dans l'autre.

Par le terme « équirépartis », on entend que les doigts d'entrainement et les moyens de coopération sont répartis de manière symétrique par rapport à leur axe longitudinal X de rotation commun.

En variante, les doigts d'entrainement et les moyens de coopération peuvent être disposés à des distances différentes par rapport à l'axe de rotation de l'ensemble, c'est-à-dire ne pas être équirépartis respectivement sur le contacteur rotatif et sur le volant de sorte à éviter de monter le volant à l'envers sur le contacteur rotatif.

De même, les doigts d'entrainement et respectivement les moyens de coopération peuvent être de formes dissymétriques afin de remplir une fonction de détrompage lors du montage du volant sur le contacteur rotatif, assurant le montage du volant dans sa position d'utilisation.

Dans une forme de réalisation préférée de l'ensemble, le contacteur rotatif comprend deux doigts d'entrainement et le volant comprend deux paires d'ailettes de blocage desdits doigts.

Dans une autre forme de réalisation préférée de l'ensemble selon l'invention, le volant comprend deux doigts d'entrainement et le contacteur rotatif comprend deux paires d'ailettes de blocage de chacun desdits doigts.

Les doigts d'entrainement peuvent être au moins en partie issus de matière du contacteur rotatif ou du volant ou bien être rapportés sur le contacteur rotatif ou le volant.

De même, les ailettes de blocage peuvent être issues de matière du contacteur rotatif ou du volant ou bien être rapportées sur le contacteur rotatif ou le volant.

Selon un aspect de l'invention, le doigt d'entrainement est de forme cylindrique ou tronconique. Bien entendu, ceci n'est aucunement limitatif de la portée de la présente invention et toute forme géométrique adaptée peut être utilisée.

Selon un autre aspect de l'invention, la partie extérieure du doigt d'entrainement comprend une pluralité de nervures, de préférence déformables de sorte à rendre l'insertion du doigt d'entrainement entre les deux ailettes de blocage lors du montage du volant plus aisée tout en maintenant leur liaison solide, assurant ainsi un entrainement en rotation efficace de l'ensemble.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1 (déjà commentée), un commutateur électrique de l'art antérieur ;
- figure 2, une vue schématique partielle d'une forme de réalisation d'un commutateur électrique d'un ensemble selon l'invention ;
- figure 3, une vue schématique partielle de la face arrière d'une forme de réalisation d'un volant d'un ensemble selon l'invention ;
- figure 4, une vue schématique partielle de face en transparence du commutateur électrique de la figure 2 sur lequel est monté le volant de la figure 3,
- figure 5, une vue schématique partielle latérale de l'ensemble de la figure 4.

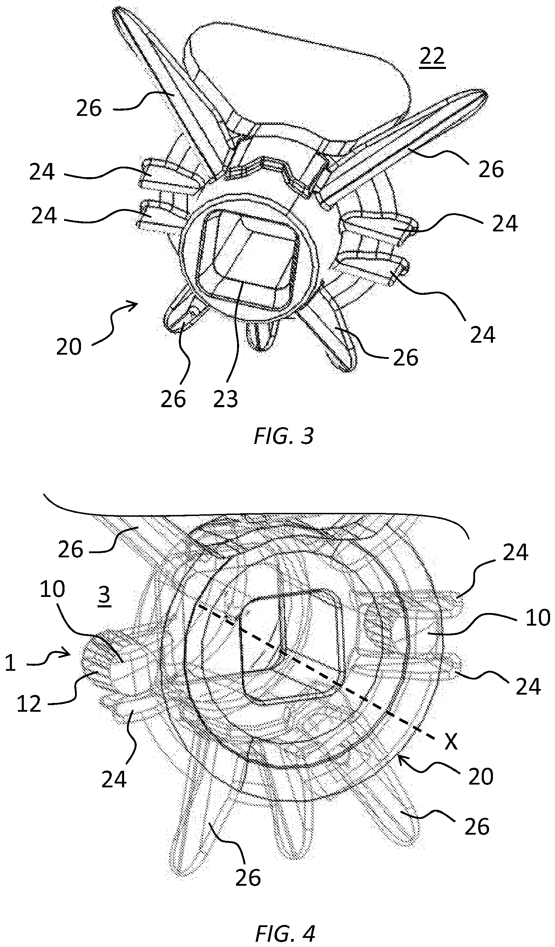

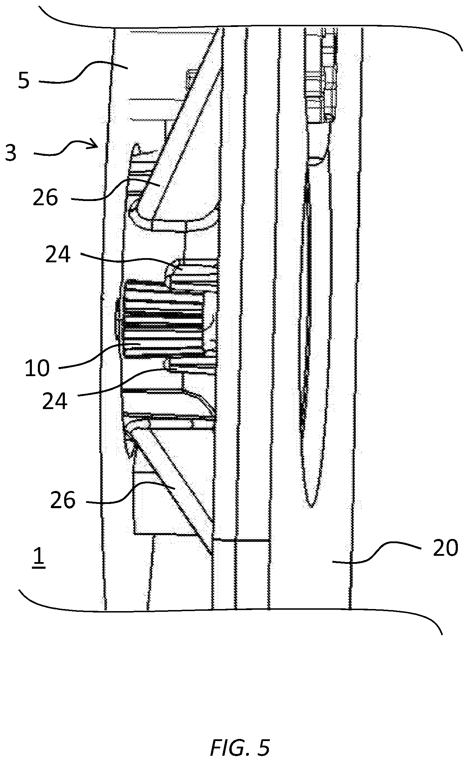

L'ensemble selon l'invention, illustré aux figures 4 et 5, comprend un commutateur électrique 1 et un volant directionnel 20 et est destiné à être monté sur une colonne de direction d'un véhicule (non représentés), notamment un véhicule automobile.

Le volant directionnel 20 est utilisé de façon connue par le conducteur afin de diriger le véhicule et est relié à cette fin à ladite colonne de direction.

En référence à la figure 2, le commutateur électrique 1 comprend un organe fixe 2, monté sur le tableau de bord (non représenté) du véhicule, et un organe mobile se présentant sous la forme d'un contacteur rotatif 3 qui permet d'établir, via un connecteur électrique 4, les divers contacts électriques requis lors du fonctionnement de ce commutateur 1.

Dans cet exemple, le contacteur rotatif 3 comprend une platine annulaire 5 comportant une ouverture centrale 6 qui est agencée pour recevoir le haut de la colonne de direction reliée au volant 20.

Selon l'invention, le contacteur rotatif 3 comprend deux doigts 10 d'entrainement en rotation et le volant 20 comprend sur sa partie arrière de moyens de coopération avec les deux doigts 10 se présentant dans cet exemple sous la forme de deux paires d'ailettes de blocage 24 issues de matière du volant 20 et permettant chacune de bloquer un doigt d'entrainement 10 de sorte que le contacteur électrique 3 et le volant 20 soient solidaires en rotation.

Par le terme « arrière », on entend de la partie arrière 22 du volant 20 par rapport au conducteur d'un véhicule lorsque le volant 20 est monté en position d'utilisation dans le véhicule.

Les formes des doigts d'entrainement 10 du contacteur rotatif 3 et des paires d'ailettes de blocage 24 du volant 20 sont donc complémentaires de sorte à permettre l'entrainement en rotation du contacteur rotatif 3 par le volant 20.

Les doigts 10 et les paires d'ailettes 24 peuvent être disposées symétriquement par rapport à l'axe X de rotation de l'ensemble 1, 20 afin de répartir les efforts de torsion de manière équivalente suivant que la rotation du volant 20 s'effectue dans un sens ou dans l'autre.

En variante, les doigts 10 et les paires d'ailettes 24 peuvent être disposées de manière dissymétrique de sorte à assurer une fonction de détrompage lors du montage du volant 20 sur le contacteur rotatif 3.

Un intérêt important de la présente invention réside dans le fait que chaque doigt d'entrainement 10 est au moins en partie recouvert d'un matériau polymère, de préférence élastomère. En effet, un tel matériau permet de rendre le montage du volant 20 sur le contacteur rotatif 3 aisé tout en permettant à leur liaison d'être solide, silencieuse et dépourvue de jeux fonctionnels.

Par les termes « au moins en partie recouvert », on entend que le doigt d'entrainement 10 peut être entièrement constitué d'un matériau polymère ou bien qu'il comprend un corps ou noyau, par exemple issu de matière respectivement du contacteur rotatif 3, qui est recouvert d'un revêtement en un matériau élastomère.

De plus, dans cet exemple, chaque doigt d'entrainement 10 est de forme sensiblement cylindrique et comprend sur sa partie extérieure une pluralité de nervures 12 déformables s'étendant radialement sur la longueur du doigt 10 de sorte à permettre une insertion aisée du doigt 10 entre les deux ailettes de blocage 24 correspondantes tout en assurant une liaison solide et un entrainement en rotation efficace de l'ensemble 1 et 20.

Il va de soi que le contacteur rotatif 3 et le volant 10 peuvent comprendre respectivement un seul doigt d'entrainement 10 ou plus de deux doigts d'entrainement 10 et autant de paires d'ailettes de blocage 24 correspondantes.

Dans une autre forme de réalisation (non illustrée), symétrique de celle qui vient d'être décrite, les doigts d'entrainement 10 sont disposés sur la partie arrière 22 du volant 20 et les paires d'ailettes de blocage 24 sont disposées de manière complémentaire sur la platine annulaire 5 du contacteur rotatif 3.

La présente invention n'est pas limitée aux exemples décrits ci-dessus et est susceptible de nombreuses variantes accessibles à l'homme de l'art.

Notamment, la forme, les dimensions et le positionnement des doigts d'entrainement 10 et des paires d'ailettes de blocage 24 correspondantes tels que représentés sur les figures de façon à illustrer un exemple de réalisation de l'invention, ne sauraient être interprétés comme limitatifs.

## Revendications

1. Ensemble comprenant un commutateur électrique (1) et un volant (20) directionnel d'un véhicule, notamment automobile, ledit commutateur électrique (1) comprenant un contacteur rotatif (3) sur lequel est monté ledit volant (20), ledit ensemble étant l'un du contacteur rotatif (3) ou du volant (20) comprenant au moins un doigt d'entrainement (10) en rotation de l'autre du volant (20) ou du contacteur rotatif (3), l'autre du volant (20) ou du contacteur rotatif (3) comprenant des moyens de coopération (24) avec ledit doigt d'entrainement (10), **caractérisé en ce que** les moyens de coopération comprennent au moins une paire d'ailettes de blocage (24) du doigt d'entrainement (10), ledit doigt d'entrainement (10) étant au moins en partie recouvert d'un matériau polymère.

2. Ensemble selon l'une des revendications précédentes, **caractérisé en ce que** le matériau polymère est un matériau élastomère.

3. Ensemble selon l'une des revendications 1 ou 2, **caractérisé en ce que** les doigts d'entrainement (10) et les paires d'ailettes de blocage (24) sont équirépartis respectivement sur le contacteur rotatif (3) et sur le volant (20).

4. Ensemble selon l'une des revendications précédentes, **caractérisé en ce que** le contacteur rotatif (3) comprend deux doigts d'entrainement (10) et le volant (20) comprend deux paires d'ailettes de blocage (24) desdits doigts (10).

5. Ensemble selon l'une des revendications 1 à 3, **caractérisé en ce que** le volant (20) comprend deux doigts d'entrainement (10) et le contacteur rotatif (3) comprend deux paires d'ailettes de blocage (24) de chacun desdits doigts (10).

6. Ensemble selon l'une des revendications précédentes, **caractérisé en ce que** les doigts d'entrainement (10) sont au moins en partie issus de matière du contacteur rotatif (3) ou du volant (20) ou bien rapportés sur le contacteur rotatif (3) ou le volant (20).

7. Ensemble selon l'une des revendications 1 à 6, **caractérisé en ce que** les ailettes de blocage (24) sont issues de matière du contacteur rotatif (3) ou du volant (20) ou bien rapportées sur le contacteur rotatif (3) ou le volant (20).

8. Ensemble selon l'une des revendications précédentes, **caractérisé en ce que** le doigt d'entrainement (10) est de forme cylindrique ou tronconique.

9. Ensemble selon l'une des revendications précédentes, **caractérisé en ce que** la partie extérieure du doigt d'entrainement (10) comprend une pluralité de nervures (12).

## Patentansprüche

1. Anordnung, die einen elektrischen Schalter (1) und ein Lenkrad (20) eines Fahrzeugs, insbesondere eines Kraftfahrzeugs umfasst, wobei der elektrische Schalter (1) einen Drehschalter (3) umfasst, auf dem das Lenkrad (20) montiert ist, wobei die Anordnung der Drehschalter (3) oder das Lenkrad (20) ist, der/das mindestens einen Finger (10) zum Antreiben in Drehung des anderen des Lenkrads (20) oder des Drehschalters (3) umfasst, wobei der andere des Lenkrads (20) oder des Drehschalters (3) Mittel (24) zum Zusammenwirken mit dem Antriebsfinger (10) umfasst, **dadurch gekennzeichnet, dass** die Zusammenwirkungsmittel mindestens ein Paar Blockierungsrippen (24) des Antriebsfingers (10) umfassen, wobei der Antriebsfinger (10) mindestens zum Teil mit einem Polymerwerkstoff überzogen ist.

2. Anordnung nach einem der vorhergehenden Ansprüche, **dadurch gekennzeichnet, dass** der Polymerwerkstoff ein Elastomerwerkstoff ist.

3. Anordnung nach einem der Ansprüche 1 oder 2, **dadurch gekennzeichnet, dass** die Antriebsfinger (10) und die Blockierungsrippenpaare (24) gleichmäßig jeweils auf dem Drehschalter (3) und auf dem Lenkrad (20) verteilt sind.

4. Anordnung nach einem der vorhergehenden Ansprüche, **dadurch gekennzeichnet, dass** der Drehschalter (3) zwei Antriebsfinger (10) umfasst, und das Lenkrad (20) zwei Blockierungsrippenpaare (24) der Finger (10) umfasst.

5. Anordnung nach einem der Ansprüche 1 bis 3, **dadurch gekennzeichnet, dass** das Lenkrad (20) zwei Antriebsfinger (10) umfasst, und der Drehschalter (3) zwei Blockierungsrippenpaare (24) jedes der Finger (10) umfasst.

6. Anordnung nach einem der vorhergehenden Ansprüche, **dadurch gekennzeichnet, dass** die Antriebsfinger (10) mindestens zum Teil aus einem Stück mit dem Drehschalter (3) oder dem Lenkrad (20) bestehen oder auf dem Drehschalter (3) oder dem Lenkrad (20) angebaut sind.

7. Anordnung nach einem der Ansprüche 1 bis 6, **dadurch gekennzeichnet, dass** die Blockierungsrippen (24) aus einem Stück mit dem Drehschalter (3) oder dem Lenkrad (20) bestehen oder auf dem Drehschalter (3) oder dem Lenkrad (20) angebaut sind.

8. Anordnung nach einem der vorhergehenden Ansprüche, **dadurch gekennzeichnet, dass** der Antriebsfinger (10) zylindrische oder kegelstumpfförmige Form hat.

9. Anordnung nach einem der vorhergehenden Ansprüche, **dadurch gekennzeichnet, dass** der äußere Teil des Antriebsfingers (10) eine Vielzahl von Rippen (12) umfasst.

## Claims

1. An assembly comprising an electric switch (1) and a steering wheel (20) of a vehicle, in particular a motor vehicle, said electric switch (1) comprising a rotary contactor (3) on which said steering wheel (20) is mounted, said assembly being such that one of the rotary contactor (3) or the steering wheel (20) comprises at least one driver catch (10) for rotating the other one of the steering wheel (20) or the rotary contactor (3), the other one of the steering wheel (20) or the rotary contactor (3) comprises cooperation means (24) with said driver catch (10), **characterised in that** the cooperation means comprise at least one pair of blocking wings (24) for the driver catch (10), said driver catch (10) being at least partially covered by a polymer material.

2. The assembly according to any one of the preceding claims, **characterised in that** the polymer material is an elastomer material.

3. The assembly according to any one of claims 1 or 2, **characterised in that** the driver catch (10) and the pairs of blocking wings (24) are uniformly distributed respectively on the rotary contactor (3) and on the steering wheel (20).

4. The assembly according to any one of the preceding claims, **characterised in that** the rotary contactor (3) comprises two driver catches (10) and the steering wheel (20) comprises two pairs of blocking wings (24) for said catches (10).

5. The assembly according to any one of claims 1 to 3, **characterised in that** the steering wheel (20) comprises two driver catches (10) and the rotary contactor (3) comprises two pairs of blocking wings (24) for each of said catches (10).

6. The assembly according to any one of the preceding claims, **characterised in that** the driver catches (10) come at least in part from material of the rotary contactor (3) or of the steering wheel (20) or are attached on the rotary contactor (3) or the steering wheel (20).

7. The assembly according to any one of claims 1 to 6, **characterised in that** the blocking wings (24) come from material of the rotary contactor (3) or of the steering wheel (20) or are attached on the rotary contactor (3) or the steering wheel (20).

8. The assembly according to any one of the preceding claims, **characterised in that** the driver catch (10) is cylindrical or truncated in shape.

9. The assembly according to any one of the preceding claims, **characterised in that** the external part of the driver catch (10) comprises a plurality of ribs (12).
